# EUROPEAN PATENT SPECIFICATION

(11) **EP 0 341 703 B1**
(45) Date of publication and mention of the grant of the patent: **18.08.1993**
(21) Application number: 89108440.2
(22) Date of filing: 10.05.1989
(51) Int. Cl.: C01G 23/047, C09C 1/36

(54) **Acicular titanium dioxide particles and method of the production thereof**
Nadelförmige Titandioxydteilchen und Verfahren zu ihrer Herstellung
Particules aciculaires de dioxyde de titanium et procédé pour les prépares

(30) Priority: 11.05.1988 JP 112562/88
(43) Date of publication of application: 15.11.1989
(73) Proprietor: ISHIHARA SANGYO KAISHA, LTD., Nishi-ku Osaka (JP)
(72) Inventor: Okuda, Haruo, Yokkaichi-shi (JP); Takahashi, Hideo, Yokkaichi-shi (JP); Yamada, Eiji, Yokkaichi-shi (JP)
(74) Representative: Henkel, Feiler, Hänzel & Partner

(56) References cited:
- GB-A- 1 254 208
- US-A- 3 579 310
- US-A- 3 625 726
- PATENT ABSTRACTS OF JAPAN; vol.5, no.85 (C-57)(757), 3 June 1981.
- PATENT ABSTRACTS OF JAPAN; vol.5, no.31 (C-45)(703) 25 February 1981.

## Description

The present invention relates to a process for producing acicular titanium dioxide particles of an even grain size for use in electrically conductive substrates, catalysts, orienting substances for magnetic particles, specific pigments and the like, or substitutes for reinforcing materials such as glass fibres, potassium titanate fibers and the like. The process of the present invention can produce acicular titanium dioxide particles of a relatively even grain size which have well grown both in the longitudinal direction and in the transverse direction and allows control of grain sizes (in length and cross-sectional diameter) of acicular titanium dioxide particles to be conveniently effected by varying an amount of acicular titanium dioxide particles to be added as seeds. Therefore, the present invention can produce acicular titanium dioxide particles suitable to the end use in the field of application at a higher yield.

As an example of the production of acicular titanium dioxide particles, Japanese Patent KOKOKU (Post-Exam. Publn.) No.47-44974 corresponding to U.S.Patent No.3,579,310 describes a process for producing acicular titanium dioxide pigments by calcining a mixture of titanium dioxide, sodium chloride and an oxyphosphoric compound at a temperature of 725 to 1000 °C and removing soluble salts from the resulting product. Japanese Patent KOKOKU (Post-Exam. Publn.) No.55-32648 describes a process for producing titania hydrate fibers by extracting alkali metal components in fibrous alkali metal titanate single crystals with an aqueous acid solution. Japanese Patent KOKAI (Laid-Open) Nos.56-78423 and 56-155098 describe that acicular titanium dioxide particles having a length of 1.0 to 1.5 µm and a width of about 0.1 µm are produced by oxidizing gradually a solution of titanium trichloride with an oxidizing gas in the range of temperature from 50 °C to its boiling point. The aforementioned prior art, for example, the process of Japanese Patent KOKOKU (Post-Exam. Publn.) No.47-44974 is hardly capable of producing acicular titanium dioxide particles predominantly of an even length, but produces a mixture containing a higher amount of shorter particles than that of longer ones, so that subsequent screening operation is required to obtain only the desired longer ones. Moreover, it is not easy to effectively separate longer acicular titanium dioxide particles from the mixture by the screening operation. In the process as described in Japanese Patent KOKOKU (Post-Exam. Publn.) No.55-32648, the extraction of alkali metal components from fibrous alkali metal titanate single crystals is apt to fracture fibrous shapes and to diminish the strength of particles and renders the process complicated. The process as described in Japanese Patent KOKAI (Laid-Open) Nos.56-78423 and 56-155098 are difficult to produce acicular titanium dioxide particles at a satisfactory reproducibility and, moreover, the produced particles are so small as having a length of 1.0 to 1.5 µm and a cross-sectional diameter of 0.1 µm.

The present invention has been derived from laborious research to avoid the aforementioned disadvantages of the process of Japanese Patent KOKOKU (Post-Exam. Publn.) No.47-44974 in view of the fact that the patent process is the most economical among the abovementioned prior arts. That is, the present invention has been accomplished on the basis of the discovery that acicular titanium dioxide particles of an even grain size which have well grown in both the longitudinal direction and the transverse direction can be produced by the presence of acicular titanium dioxide particles having a relatively small grain size or finely divided acicular titanium dioxide particles as seeds in a mixture of raw materials during the calcining thereof.

According to the present invention, there are provided acicular titanium dioxide particles characterized by having a weight average cross-sectional diameter of 0.05 to 0.8 µm and a weight average length of 3 to 7 µm with 70 wt % or more of the particles being of a length of 2 µm or more and a process for producing acicular titanium dioxide characterized by calcining a mixture of titanium source, an alkali metal source and an oxyphosphoric compound in the presence of acicular titanium dioxide seeds.
FIGURE 1 is a transmission electron micrograph of acicular titanium dioxide particles produced in Example 1 at 5000 fold magnification, and
FIGURE 2 is a transmission electron micrograph of acicular titanium dioxide particles produced in Comparative Example 1 at 5000 fold magnification.

The acicular titanium dioxide products produced according to the prior arts are a mixture of particles of various lengths, whereas the acicular titanium dioxide particles of the present invention are of a relatively even grain size having a cross-sectional diameter of 0.05 to 0.8 µm and a weight average length of 3 to 7 µm with 70 wt % or more of the particles having a length of 2 µm or more. Although the TiO₂ purity of the acicular titanium dioxide produced by the present invention depends upon the types of raw materials to be used, especially the type of titanium source, the purity is generally as high as 90 % or more as TiO₂.

Titanium sources, the essential components in the materials used in the present invention, include, for example, titanium dioxide pigments, titanium hydroxide, dry powders produced by drying and milling titanium dioxide sols, rutile sand, synthetic rutile and the like. The titanium purity of those sources should be preferably 80 % by weight or more as TiO₂. It is preferred in view of reactivity with other components to employ the dry powders from titanium dioxide sols. There are various processes for producing the sols, one of which comprises neutralizing an aqueous solution of titanium tetrachloride with an aqueous solution of sodium hydroxide while maintaining the titanium tetrachloride solution at room temperature to precipitate colloidal amorphous titanium hydroxide and then maturing the same to produce a sol of minute rutile titania.

Alkali metals sources include chlorides, carbonates, hydroxides, and the like of alkali metals such as sodium, potassium and the like, though it is preferred in view of reactivity to employ sodium chloride.

Oxyphosphoric compounds mean oxygen-containing compounds of phosphorus which are capable of producing oxyacids or oxides of phosphorous through thermal decomposition or hydrolysis and include, for example, sodium phosphates such as NaPO₃, Na₃PO₄, Na₂HPO₃, Na₂HPO₄, NaH₂PO₂, NaH₂PO₄, Na₂H₂P₂O₇, Na₄P₂O₇ and Na₅P₃O₁₀, potassium phosphates such as K₃PO₄, K₄P₂O₇, K₅P₃O₁₀, K₂HPO₄, K₂HPO₃, KH₂PO₄, KH₂PO₂, K₂H₂P₂O₇ and KPO₃, ammonium phosphates such as NH₄H₂PO₄, (NH₄)₂HPO₄, (NH₄)₃PO₄, Na(NH₄)HPO₄ and the like, phosphorus oxides such as P₂O₃ and P₂O₅, oxyphosphoric acids such as H₃PO₃, H₄P₂O₅, H₃PO₄, H₄P₂O₇ and HPO₃. It is preferred in view of reactivity, easier handling and cost to employ NaH₂PO₄, Na₂HPO₄, Na₄P₂O₇ and Na₅P₃O₁₀.

With respect to proportions of the alkali metal source and the oxyphosphoric compound to the titanium source to be mixed, the titanium source and the alkali metal source may be mixed in a TiO₂ / alkali metal weight ratio of 1 / 0.03 to 7, the titanium source and the oxyphosphoric compound may be in a TiO₂ / P weight ratio of 1 / 0.005 to 1. A weight ratio of TiO₂ / alkali metal / P should preferably be in the range of 1 / 0.1 to 4 / 0.02 to 0.6.

According to the present invention, the titanium source, the alkali metal source and the oxyphosphoric compound as described above are mixed and then the mixture is calcined in the presence of acicular titanium dioxide seeds. Before calcining, those materials should be mixed as uniform as possible to achieve a narrower size distribution of acicular titanium dioxide particles. For the purpose, one may employ a method for producing a uniform mixture of materials where the titanium source, the alkali metal source the oxyphosphoric compound and acicular titanium dioxide seeds are wet mixed to form a slurry of the mixture having a uniform composition, and the slurry is spray dried to obtain a powdery mixture of materials having the components distributed uniformly, i.e.,having a uniform composition.

The term "acicular titanium dioxide seeds" as used in the specification refers to titanium dioxide particles themselves having an acicular crystal form. As seeds one may use relatively small acicular titanium dioxide particles having a length of 2 µm or less and a cross-sectional diameter of 0.02 to 0.8 µm selected from those produced according to prior art or finely divided ones thereof. Such seeds may be produced by a method as described in Japanese Patent KOKOKU (Post-Exam. Publn.) No.47-44974 mentioned above where a milled mixture of TiO₂, NaCl and NaH₂PO₄ is calcined at a temperature of 825 °C for 5 hours, then subjected to elution and the resulting acicular titanium dioxide is classified to obtain those having a length of 2 µm or less which may be finely divided, if desired, to be used as seeds. The milling of acicular titanium dioxide particles may produce those having a smaller aspect ratio, plate-, columnar- and rod-shapes, which are also effective to act as seeds. It may be postulated that this effectiveness is attributed to the same acicular habit preserved in the milled particles as that before the milling. The milled particles are desirably such as at least 80 % by weight thereof having a length of 1 µm or less.

In the present invention, acicular titanium dioxide seeds should exist in an amount of 1 to 99 % by weight, preferably 3 to 60 % by weight, and most preferably 5 to 40 % by weight TiO₂ on the basis of the total TiO₂ contained in the mixture of materials as described above by addition of the seeds thereto. If the seeds exist in an amount less than the lower limit, the distribution of aspect ratio of the resulting acicular titanium dioxide product becomes too wide to produce particles of the desirable even grain size.

According to the present invention, the calcining of a mixture of materials in the presence of acicular titanium dioxide seeds is effected generally at a temperature of 700 to 1000 °C, preferably 800 to 900 °C. If the temperature of calcining is lower than the above lower limit, acicular titanium dioxide are hardly produced. If it is too high, sintering of acicular grains proceeds to produce massive particles. Therefore, the temperature should be controlled not to be outside the range as defined above. The calcined mixture is then introduced into water, filtered, washed and, if necessary, washed further with an acid or alkaline solution to remove soluble salts, and dried to produce acicular titanium dioxide particles. In the process, if necessary, the calcined mixture may be pre-crushed before introducing into water, or heating may be effected after the introducing in order to promote the separation of acicular titanium dioxide particles. In an aspect of the present invention, the resulting acicular titanium dioxide particles may be classified into two groups, i.e., longer acicular titanium dioxide particles and shorter ones by means of a classifying apparatus such as cyclone. The present invention can produce acicular titanium dioxide particles having a length of 3 to 20 µm and a cross-sectional diameter of 0.1 to 0.8 µm at a high yield of 70 to 90 % TiO₂ when the seeds are added at 5 % based on the total TiO₂. Alternatively, when the seeds are added at 90 % based on the total TiO₂, acicular particles having a length of 2 to 5 µm and a cross-sectional diameter of 0.05 to 0.2 µm at a similar high yield.

The acicular titanium dioxide particles produced in accordance with the present invention as described above are of an even longer grain size. They may be incorporated in various resins such as common engineering plastics, specific engineering plastics, thermoplastic resins and thermosetting resins in an appropriate amount to enhance significantly stiffness, mechanical strength and the like of formed plastics. Alternatively, acicular titanium dioxide particles having their surface coated with an electrically conductive layer of the SnO₂/Sb type after washed well exhibit an excellent electro-conductive performance and useful as electro-conductivity imparting agents. The acicular titanium dioxide particles of the present invention may be also used as catalysts and supports of catalysts by utilizing their acicular type.

Since the acicular titanium dioxide particles of the present invention are of an even grain size which have grown well both in the longitudinal direction and in the transverse direction, classifing operation can be eliminated rendering the present process for producing acicular titanium dioxide excellent in industry. In an aspect of the present invention, the grain size of the resulting acicular titanium dioxide particles can be conveniently controlled by varying an amount of acicular titanium dioxide seeds.

The present invention will be illustrated with reference to the following Examples, Compratives and Experiments.

### Production of acicular titanium dioxide seeds

40 parts by weight (as calculated as TiO₂) of titanium dioxide produced by drying and milling a titanium dioxide sol, 40 parts by weight of NaCl powder and 10 parts by weight of Na₂HPO₄ are mixed uniformly, placed in a crucible and calcined in an electric furnace at a temperature of 825 °C for 3 hours. Then, the calcined mixture is introduced into deionized water, boiled for one hour, filtered and washed to remove soluble salts. Subsequently the resulting washed cake is again introduced in deionized water, controlled to pH 11.0 by adding ammonia water and then classified with a liquid cyclone into shorter particles (70 % or more being of a length of 0.1 to 2 µm and a cross-sectional diameter of 0.02 to 0.1 µm) and longer ones (70 % or more being of a length of 2 to 6 µm and a cross-sectional diameter of 0.02 to 0.1 µm). Among them the shorter acicular titanium dioxide particles are dried and milled with a disk-type vibration mill to produce acicular titanium dioxide seeds having a length of 0.05 to 0.5 µm and a cross-sectional diameter of 0.02 to 0.1 µm.

The titanium dioxide sol used in this case has been formed by neutralizing a solution of titanium tetrachloride at a concentration of 200 g TiO₂/ℓ with a solution of sodium hydroxide while maintaining the temperature of the former solution at a temperature of 30 °C, to precipitate colloidal amorphous titanium hydroxide which was matured at a temperature of 70 °C for 5 hours to produce a sol of fine rutile titania. The composition of the titania produced by drying and milling the sol was 91.89 % TiO₂, 1.86 % Na₂O and 0.03 % Cl, and has an ignition loss of 6.22 %.

### Example 1

38 parts by weight (as TiO₂) of the aforementioned titanium dioxide produced by drying and milling the titanium dioxide sol, 40 parts by weight of NaCl powder, 10 parts by weight of Na₂HPO₄ and 2 parts by weight of the aforementioned acicular titanium dioxide seeds are mixed uniformly, placed in a crucible and calcined in an electric furnace at a temperature of 825 °C for 3 hours.

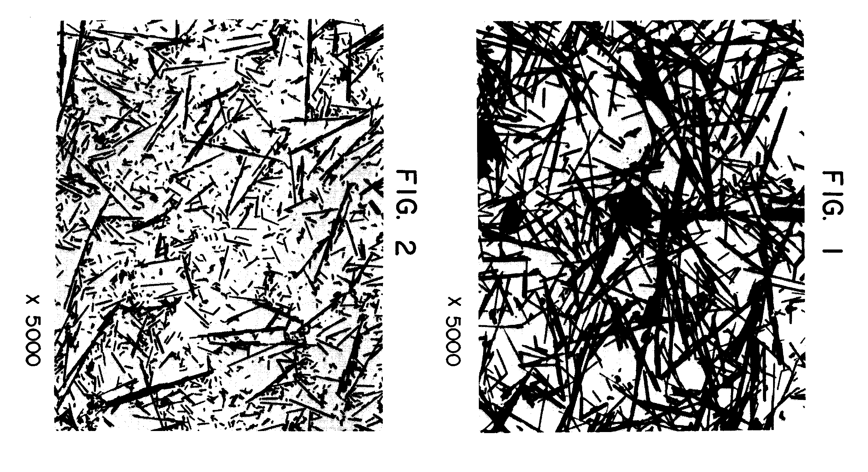

Then the calcined mixture is introduced in deionized water, boiled for one hour, filtered and washed to remove soluble salts. After drying, there are obtained acicular titanium dioxide particles which have well grown in both the longitudinal direction and the transverse one as having a length of 3 to 16 µm, a cross-sectionsl diameter of 0.1 to 0.6 µm, a weight average length of 5.1 µm, with 78 % by weight of the particles having a length of 2.0 µm or more. The product has a TiO₂ purity of 95.8 % by weight. A transmission electron micrograph of the produced particles is shown in FIGURE 1.

### Example 2

The procedure as described in Example 1 is repeated except that the titanium dioxide produced by drying and milling the sol is used in an amount of 2 parts by weight and acicular titanium dioxide seeds are 38 parts by weight to produce acicular titanium dioxide particles of an even grain size having a length of 2 to 4 µm, a cross-sectional diameter of 0.1 to 0.2 µm and a weight average length of 3.1 µm. Those having a length of 2.0 µm or more comprises 86 % by weight of the product. The TiO₂ purity is 94.7 % by weight.

### Comparative Example 1

The procedure as described in Example 1 is repeated except that no acicular titanium dioxide seeds are added and the titanium dioxide produced by drying and milling the sol is incorporated in an amount of 40 parts by weight. The acicular titanium dioxide particles having a length of 3 µm or more and a cross-sectional diameter of 0.02 to 0.1 µm comprise 12 % by weight of the product, and those having a length of 3 µm or less and a cross-sectional diameter of 0.02 to 0.1 µm comprises 88 % by weight. 63 % by weight of the latter have a length of 2 µm or less and a cross-sectional diameter of 0.02 to 0.1 µm. The product has a weight average length of 1.2 µm. A transmission electron micrograph of the product is shown in Figure 2.

## Claims

1. Acicular titanium dioxide particles characterized by having a cross-sectional diameter of 0.05 to 0.8 µm, a weight average length of 3 to 7 µm, with 70% or more of the particles being of a length of 2 µm or more and obtained by calcining a titanium source, alkali metal source and oxyphosphoric compound in the presence of acicular titanium dioxide seeds.

2. A process for producing acicular titanium dioxide particles characterized by calcining a mixture containing a titanium source, an alkali metal source and an oxyphosphoric compound in the presence of acicular titanium dioxide seeds.

3. A process of Claim 2 in which at least 80 % by weight of said acicular titanium dioxide seeds have a length of 2 µm or less.

4. A process of Claim 2 in which said calcining is effected at a temperature of 700 to 1000 °C.

5. A process of Claim 2 in which a proportion of said alkali metal source and said oxyphosphoric compound to said titanium source to be mixed is 1 / 0.1 to 4 / 0.02 to 0.6 by weight as TiO₂, an alkali metal and P, respectively.

6. A process of Claim 2 in which said acicular titanium dioxide seeds comprises 1 to 99 % by weight of said titanium source.

## Patentansprüche

1. Nadelförmige Titandioxidteilchen, gekennzeichnet durch einen Querschnittsdurchmesser von 0,05 bis 0,8 µm und eine Gewichtsdurchschnittslänge von 3 bis 7 µm, wobei 70 % oder mehr der Teilchen eine Länge von 2 µm oder mehr aufweisen, und erhalten durch Calcinieren eines Titanlieferanten, eines Alkalimetallieferanten und einer Oxyphosphorverbindung in Gegenwart einer nadelförmigen Titandioxidsaat.

2. Verfahren zur Herstellung von nadelförmigen Titandioxidteilchen, gekennzeichnet durch Calcinieren eines einen Titanlieferanten, einen Alkalimetallieferanten und eine Oxyphosphorverbindung enthaltenden Gemischs in Gegenwart einer nadelförmigen Titandioxidsaat.

3. Verfahren nach Anspruch 2, wobei mindestens 80 Gew.-% der nadelförmigen Titandioxidsaat eine Länge von 2 µm oder weniger aufweisen.

4. Verfahren nach Anspruch 2, wobei das Calcinieren bei einer Temperatur von 700 bis 1000°C durchgeführt wird.

5. Verfahren nach Anspruch 2, wobei das Mischungsgewichtsverhältnis an Alkalimetallieferanten und der Oxyphosphorverbindung zu dem Titanlieferanten 1/0,1 bis 4/0,02 bis 0,6 TiO₂, Alkalimetall bzw. P beträgt.

6. Verfahren nach Anspruch 2, wobei die nadelförmige Titandioxidsaat 1 bis 99 Gew.-% an dem Titanlieferanten ausmacht.

## Revendications

1. Particules aciculaires de dioxyde de titane, caractérisées par le fait qu'elles possèdent un diamètre de section droite de 0,05 à 0,8 µm, une longueur moyenne pondérale de 3 à 7 µm, 70% en poids, ou plus, des particules ayant une longueur d'au moins 2 µm, et par le fait qu'elles sont obtenues par calcination d'une source de titane, d'une source de métal alcalin et d'un composé oxyphosphorique, en présence de germes aciculaires de dioxyde de titane.

2. Procédé de production de particules aciculaires de dioxyde de titane, caractérisé en ce que l'on calcine un mélange contenant une source de titane, une source de métal alcalin et un composé oxyphosphorique, en présence de germes aciculaires de dioxyde de titane.

3. Procédé selon la revendication 2, dans lequel au moins 80% en poids desdits germes aciculaires de dioxyde de titane ont une longueur d'au plus 2 µm.

4. Procédé selon la revendication 2, dans lequel ladite calcination est réalisée à une température de 700 à 1000°C.

5. Procédé selon la revendication 2, dans lequel la proportion de ladite source de métal alcalin et dudit composé oxyphosphorique par rapport à ladite source de titane à mélanger est de 1/0,1 à 4/0,02 à 0,6, en poids, respectivement de TiO₂, métal alcalin et P.

6. Procédé selon la revendication 2, dans lequel lesdits germes aciculaires de dioxyde de titane constituent de 1 à 99% en poids de ladite source de titane.
